# EUROPÄISCHE PATENTSCHRIFT

(11) **EP 0 399 138 B1**
(45) Veröffentlichungstag und Bekanntmachung des Hinweises auf die Patenterteilung: **25.10.1995**
(21) Anmeldenummer: 90102237.6
(22) Anmeldetag: 05.02.1990
(51) Int. Cl.: G01B 11/24, G01B 11/00, H05K 13/00, G01R 31/308

(54) **Verfahren zur dreidimensionalen Prüfung von Leiterplatten**
Method for three-dimensional examination of printed circuits
Procédé pour l'examen en trois dimensions de circuits imprimés

(30) Priorität: 28.02.1989 DE 3906288
(43) Veröffentlichungstag der Anmeldung: 28.11.1990
(73) Patentinhaber: SIEMENS AKTIENGESELLSCHAFT, 80333 München (DE)
(72) Erfinder: Doemens, Günter, Dr., D-8150 Holzkirchen (DE); Schneider, Richard, Dr., D-8028 Taufkirchen (DE)

(56) Entgegenhaltungen:
- EP-A- 0 070 141
- EP-A- 0 265 769
- EP-A- 0 318 249
- US-A- 4 583 857
- US-A- 4 650 333

## Beschreibung

Die Erfindung betrifft ein Verfahren zur dreidimensionalen Prüfung von Leiterplatten unter Verwendung von räumlichen Oberflächenkoordinaten, wobei Defekte an den Strukturen der Leiterplatten erkennbar sind. Die Prüfung geschieht mittels eines ebenen lokalen Auswertefensters und der aktuellen Berechnung von Querschnittsflächen, sowie entsprechender Soll/Ist-Wertvergleiche innerhalb bestimmter Abschnitte.

Mit zunehmender Miniaturisierung der Strukturen auf Leiterbahnen nähert sich die Breite der Leiterbahnen der Leiterbahnhöhe. Da die elektrischen Eigenschaften der Leiterbahnen wesentlich von ihrem Querschnitt bestimmt werden, muß neben der Breite auch die Höhe geprüft werden, um den geforderten Querschnitt zu garantieren.

Die heutigen automatisierten Verfahren sind zum größten Teil optische Inspektionssysteme, die mit zweidimensionaler Bildauswertung arbeiten. Zur Prüfung der Strukturen, die im Bereich von 10⁻⁵ m liegen, kommt es sowohl auf eine hohe Auflösungsfähigkeit in ebener als auch in dreidimensionaler Form an. Eine Möglichkeit der Erfassung von Oberflächenstrukturen ist die Abtastung der Oberfläche mittels Laser-Triangulation. Hierbei wird der von einer Lasereinheit erzeugte optische Abtaststrahl von einem ortsauflösenden Empfänger aufgenommen. Derartige optische Empfänger werden als positionsempfindliche Fotodetektoren bezeichnet.

Aus der US-Patentschrift 4,583,857 ist ein System zur Prüfung von im wesentlichen zweidimensionalen Reliefstrukturen, insbesondere von Leiterplatten, bekannt, das mit einem über einen optischen Kopf erzeugten Lichtband eine Oberfläche abtastet. Die Höhenauflösung geschieht über entsprechende Diodenanordnungen. Die Ausgangssignale dieser Anordnung werden digitalisiert und ausgewertet. Dabei wird bestimmt, inwieweit die erhaltenen Muster mit den Nominalwerten der Leiterstruktur übereinstimmen. Dieses Verfahren ist jedoch aufgrund des eingesetzten Beleuchtungssystemes sowie der Sensoren nicht hochauflösend.

In der nicht vorveröffentlichten europäischen Patentanmeldung Nr. 0 318 249 wird ein System zur Aufnahme eines Höhenbildes vorgestellt, wobei das Triangulationsprinzip mit positionsauflösenden Sensoren verwendet wird. Verfahrensschritte zur Prüfung des Leiterbildes auf einer Leiterplatte werden nicht angegeben.

Weiterhin ist aus der US-Patentschrift Nr. 4,650, 333 ein berührungslos funktionierendes System bekannt, das Fehler im Leiterbild auf Leiterplatten erkennt. Dabei wird ebenso wie in der US 4,583, 857 nicht das Triangulationsprinzip eingesetzt. Entsprechend kann das hier beschriebene System eine für die Prüfung heutiger Leiterplatten notwendige hohe Auflösung nicht erbringen.

Den derzeit auf dem Markt erhältlichen Inspektionssystemen haften somit folgende Mängel an:
- zu geringe Höhenauflösung,
- zu geringe Verfahrensgeschwindigkeit, und
- zu komplizierte Handhabung.

Der Erfindung liegt die Aufgabe zugrunde, ein Verfahren zur Verfügung zu stellen, mittels dem die Strukturen von Leiter platten automatisch und ohne die beschriebenen Nachteile überprüfbar sind.

Die Lösung dieser Aufgabe geschieht durch ein Verfahren entsprechend der Merkmale im Anspruch 1.

Der Erfindung liegt die Erkenntnis zugrunde, daß zur Detektion von Fehlern an den erhabenen Strukturen, also den Leiterbahnen, auf Leiterplatten die Berechnung der Querschnitte der Leiterbahnen und die Berechnung der Breite der Zwischenräume sowie ein Vergleich der erhaltenen Werte mit vorgegebenen Grenzwerten als zuverlässige Kontrolle herangezogen werden kann. Dies geschieht innerhalb ebener lokaler Auswertefenster, wobei das Auswertefenster entsprechend der durch die Anzahl und Lage von Abtastpunkten vorgegebene Rasterung jeweils um einen bestimmten abgetasteten Punkt herum gebildet wird und die beschriebenen senkrecht stehenden Querschnittsflächen diesen Punkt, den Mittelpunkt des Auswertefensters, beinhalten. Jeder durch die Laser-Triangulation auf der Leiterplattenoberfläche erzeugte Lichtpunkt wird bei der Prüfung der Leiterplatte einmal der Mittelpunkt eines Auswertefensters.
Diese Auswertung geschieht in Echtzeit und mit hoher Auflösung. Das bedeutet, daß an irgendeinem ausgewählten Punkt, um den ein Auswertefenster gelegt wurde, nach der Berechnung von zwei oder mehr Querschnittsflächen erkannt wird, in welcher Richtung die Leiterbahn verläuft und somit eine Zuordnung der Querschnittsflächen zum Verlauf der Leiterbahn möglich ist.

Unter Zuhilfenahme des Höhennullniveaus wird ebenfalls im mikroskopischen Bereich und mit dem gleichen bisher beschriebenen Verfahren kontrolliert, ob eine bestimmte Mindestbreite zwischen zwei benachbarten Leiterplatten eingehalten wurde und ob eventuell kurzschlußbildende Metallisierungen mit einer endlichen Höhe, die größer als Null ist, vorhanden sind.

Eine besondere Ausgestaltung der Erfindung in bezug auf die Erkennung von Defekten an Strukturen im mikroskopischen Bereich sieht vor, daß mindestens vier Querschnittsflächen für einen Auswertevorgang berechnet werden. Durch diese Maßnahme ist eine hinreichende Genauigkeit der dreidimensionalen Prüfung gewährleistet.
Zur Vereinfachung des Verfahrens werden die senkrecht stehenden Querschnittsflächen, die sämtlichst den Mittelpunkt des aktuellen Auswertefensters beinhalten, so plaziert, daß sie untereinander gleiche Winkel bilden.

Darüber hinaus kann die Erfindung zur Auswertung der Defekte an einem Leiterbild eine Kompensation von zulässigen Verzügen, d.h. von Dehnungen, beispielsweise aufgrund von Temperatureinflüssen, bewirken bzw. berücksichtigen, was durch den Vergleich von mehreren hintereinander ausgewerteten Rasterfeldern geschieht, die gegeneinander geringfügig versetzt sind. Hierbei kann es sinnvoll sein, eine diagonale Versetzung der Rasterfelder zu wählen, da die Auswertefenster im wesentlichen rechtwinklig sind und ihre Seiten vorzugsweise parallel zu den Leiterbahnen verlaufen.

Im folgenden wird anhand von schematischen Figuren ein Ausführungsbeispiel beschrieben.

Hierbei zeigen die Figuren im einzelnen:
Figur 1 einen Ausschnitt aus einer Leiterbahn 2 mit einem Auswertefenster 20,
Figur 2 zwei gegeneinander geringfügig versetzte Rasterfelder 16,17 mit darin liegenden Leiterbahnen 2.

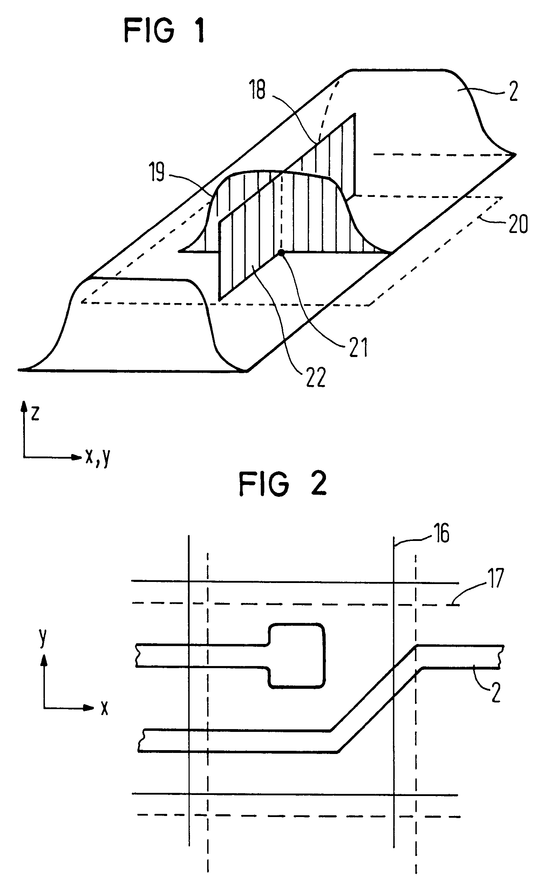

Die Figur 1 zeigt einen Ausschnitt aus einer Leiterbahn 2, in den ein Auswertefenster 20 positioniert ist, das größer sein muß als die Leiterbahnbreite. Das Auswertefenster hat den Mittelpunkt 21, der nur durch die ebenen Koordinatenrichtungen X, Y festgelegt ist. Die lokale Berechnung der Querschnittsflä chen 18,19 geschieht durch die Summierung der differentiellen Flächen 22. Diese differentiellen Flächen 22 entstehen beider Abtastung der Oberfläche, wobei jede Fläche von zwei aufeinanderfolgenden Abtastpunkten und den dadurch festgelegten, durch die Punkte laufenden Senkrechten begrenzt wird. Das Auswertefenster 20 wird um jeden abgetasteten Punkt der Oberfläche gelegt. Eine geringere Anzahl von Auswertevorgängen, beispielsweise ein Auswertefenster 20 um jeden zweiten abgetasteten Punkt, würde zu Ungunsten der Prüfsicherheit gehen. In der Regel werden vier gegeneinander versetzte Querschnittsflächen 18,19 berechnet.

In der Figur 2 sind die Rasterfelder 16 und 17 dargestellt, die diagonal gegeneinander geringfügig verschoben sind. Für jedes Rasterfeld 16,17 werden relativ einfache geometrische Größen berechnet, wie Gesamtvolumen aller Leiter, Gesamtfläche der Isolationsbereiche oder entsprechend der Schwerpunkt dieser Größen. Der Vergleich zwischen zwei gegeneinander verschobene Rasterfelder 16,17 ermöglicht es, zulässige Verzüge innerhalb der Leiterplatten bezüglich der Prüfung zu kompensieren.

Die in der Regel rechteckig ausgebildeten Auswertefenster oder Rasterfelder beinhalten beispielsweise 10² bzw. 100² Pixel. Pixel ist die allgemein gebräuchliche Abkürzung für "Picture Element". Mit einem erfindungsgemäßen Verfahren kann eine Steigerung bei der Auswertung von 10⁵ pro Sekunde auf 10⁶ bis 10⁷ Pixel pro Sekunde ermöglicht werden.

## Patentansprüche

1. Verfahren zur dreidimensionalen Prüfung von Leiterplatten anhand von mittels Triangulation ermittelten räumlichen Oberflächenkoordinaten (X,Y,Z) für die Erkennung von Defekten an den Strukturen im mikroskopischen Bereich mittels eines ebenen lokal verschiebbaren Auswertefensters (20), wobei
- die Vielzahl der innerhalb des Auswertefensters (20) auf der Oberfläche des erzeugten Höhenrasterbildes vorhandenen Bildpunkte eine gleichmäßige Rasterung in X- und Y-Richtung aufweist,
- jeder Oberflächenrasterpunkt der Bildaufnahme zur Erzeugung eines Höhenrasterbildes, bezogen auf die ebenen Koordinaten (X,Y) einmal zum Mittelpunkt (21) des Auswertefensters (20) wird,
- zur Berechnung von Leiterbahnquerschnitten Querschnittsflächen (18,19) definiert werden , die durch das um den jeweiligen Mittelpunkt (21) aktuell gebildete Auswertefenster (20) in X- und Y-Richtung begrenzt sind und in Z-Richtung entsprechend der Oberfläche einer Leiterbahn durch die Oberfläche des Höhenrasterbildes begrenzt sind,
- die Berechnung jeder einzelnen Querschnittsfläche durch die Summierung der damit einhergehenden differentiellen Flächen (22) der Querschnittsflächen (18,19) geschieht,
- die Auswertung der erhaltenen Werte für die Querschnittsflächen (18,19) im Vergleich mit der vorgegebenen erforderlichen Breite und Höhe der Leiterbahn (2) erfolgt und
- durch die Bestimmung der Breite der Bereiche mit dem Höhenwert Z=0 ein vorgegebener Mindestabstand zwischen zwei benachbarten Leiterbahnen geprüft wird.

2. Verfahren nach Anspruch 1, wobei mindestens vier Querschnittsflächen (18,19) für einen Auswertevorgang berechnet werden.

3. Verfahren nach einem der vorhergehenden Ansprüche, wobei die Querschnittsflächen (18,19) senkrecht auf dem Auswertefenster (20) stehen.

4. Verfahren nach einem der vorhergehenden Ansprüche, wobei die Querschnittsflächen (18,19) im Mittelpunkt (21) derart angeordnet sind,. daß sie untereinander gleiche Winkel bilden.

## Claims

1. Method for three-dimensional testing of printed circuit boards on the basis of spatial surface coordinates (X, Y, Z), determined by means of triangulation, for detecting defects on the structures in the microscopic domain by means of a plane, locally displaceable evaluation window (20), it being the case that
- the multiplicity of the pixels present inside the evaluation window (20) on the surface of the height raster image generated have a uniform rastering in the X- and Y-directions,
- for the purpose of generating a height raster image, each surface pixel of the recorded image becomes the centre point (21), referred to the plane coordinates (X, Y), of the evaluation window (20) once,
- in order to calculate conductor track cross-sections, cross-section areas (18, 19) are defined which are limited in the X- and Y-directions by the evaluation window (20) currently formed about the respective centre point (21), and are limited in the Z-direction in accordance with the surface of a conductor track by the surface of the height raster image,
- the calculation of each individual cross-sectional surface is performed by summing the differential areas (22), associated therewith, of the cross-sectional surfaces (18, 19),
- the evaluation of the values obtained for the cross-sectional surfaces (18, 19) is performed in comparison with the prescribed required width and height of the conductor track (2), and
- a prescribed minimum spacing between two neighbouring conductor tracks is tested by determining the width of the regions having the height value of Z=0.

2. Method according to Claim 1, in which at least four cross-sectional surfaces (18, 19) are calculated for an evaluation operation.

3. Method according to one of the preceding claims, in which the cross-sectional surfaces (18 or 19) are perpendicular to the evaluation window (20).

4. Method according to one of the preceding claims, in which the cross-sectional surfaces (18 or 19) are arranged at the centre point (21) in such a way that they form equal angles with one another.

## Revendications

1. Procédé pour le contrôle tridimensionnel de plaquettes à circuits imprimés sur la base de coordonnées spatiales de surface (X,Y,Z), déterminées par triangulation, pour l'identification de défauts dans les structures dans la gamme microscopique, à l'aide d'une fenêtre plane d'évaluation (20), pouvant être déplacée localement, selon lequel
- la multiplicité des points d'image présents à l'intérieur de la fenêtre d'évaluation (20) sur la surface de l'image de trame en hauteur produite, possède un tramage uniforme dans la direction X et dans la direction Y,
- chaque point de trame de surface devient une fois le centre (21) de la fenêtre d'évaluation (20) par rapport aux coordonnées dans le plan (X,Y), pour la production d'une image de trame en hauteur,
- pour le calcul de sections transversales de voies conductrices, les surfaces en coupe transversale (18,19) sont définies, qui sont limitées en direction X dans la direction Y, par la fenêtre d'évaluation (20) formée actuellement autour du centre respectif (21), et sont limitées, dans la direction Z, conformément à la surface des voies conductrices, par la surface de l'image de trame en hauteur,
- le calcul de chaque surface individuelle en coupe transversale est réalisé au moyen de la sommation des surfaces différentielles (22), qui interviennent dans ce cas, des surfaces en coupe transversale (18,19),
- l'évaluation des valeurs obtenues pour les surfaces en coupe transversale (18,19) s'effectue par comparaison à la largeur et à la hauteur nécessaires prédéterminées de la voie conductrice (2), et
- une distance minimale prédéterminée entre deux voies conductrices voisines est contrôlée par détermination de la largeur des zones possédant la valeur en hauteur (Z = 0).

2. Procédé suivant la revendication 1, selon lequel on calcule au moins quatre surfaces en coupe transversale (18,19) pour un processus d'évaluation.

3. Procédé suivant l'une des revendications précédentes, selon lequel les surfaces en coupe transversale (18,19) sont perpendiculaires à la fenêtre d'évaluation (20).

4. Procédé suivant l'une des revendications précédentes, selon lequel les surfaces en coupe transversale (18,19) sont disposées au centre (21) de telle sorte qu'elles font entre elles des angles égaux.
